(19) Europäisches Patentamt
European Patent Office
Office européen des brevets

(11) EP 1 341 844 B1

(12) EUROPÄISCHE PATENTSCHRIFT

(45) Veröffentlichungstag und Bekanntmachung des Hinweises auf die Patenterteilung:
**12.03.2008 Patentblatt 2008/11**

(21) Anmeldenummer: **01983603.0**

(22) Anmeldetag: **23.11.2001**

(51) Int Cl.:
***C08L 51/00*** *(2006.01)* ***C08F 285/00*** *(2006.01)*

(86) Internationale Anmeldenummer:
**PCT/EP2001/013647**

(87) Internationale Veröffentlichungsnummer:
**WO 2002/046303 (13.06.2002 Gazette 2002/24)**

(54) **THERMOPLASTISCHE FORMMASSEN**

THERMOPLASTIC MOULDED MATERIALS

MATIERES A MOULER THERMOPLASTIQUES

(84) Benannte Vertragsstaaten:
**AT BE CH CY DE DK ES FI FR GB GR IE IT LI LU MC NL PT SE TR**

(30) Priorität: **05.12.2000 DE 10060410**

(43) Veröffentlichungstag der Anmeldung:
**10.09.2003 Patentblatt 2003/37**

(73) Patentinhaber: **LANXESS Deutschland GmbH**
**51369 Leverkusen (DE)**

(72) Erfinder: **EICHENAUER, Herbert**
**41539 Dormagen (DE)**

(56) Entgegenhaltungen:
**WO-A-00/56816** **US-A- 5 932 655**

EP 1 341 844 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Zusammensetzungen, die mit unterschiedlichen Initiatoren hergestellte Pfropfpolymerisate enthalten, und sich durch eine Kombination aus guter Zähigkeit und verminderter Opazität auszeichnen, so dass die zum Einfärben der Formmasse erforderliche Pigmentmenge verringert wird.

ABS-Formmassen werden schon seit vielen Jahren in großen Mengen als thermoplastische Harze für die Herstellung von Formteilen aller Art eingesetzt. Dabei kann das Eigenschaftsspektrum dieser Harze in weiten Bereichen variiert werden.

Im Hinblick auf die ständig steigenden Anforderungen an die Kunststoffmaterialien und auf neue Anwendungsbereiche werden zunehmend ABS-Polymerisate mit speziellen Eigenschaftskombinationen benötigt.

Eine derartige spezielle Eigenschaftskombination betrifft ABS Polymerisate für die Herstellung eingefärbter kerbschlagzäher Formteile, insbesondere im Anwendungsbereich Gehäuse und Abdeckplatten. Hierbei sollen möglichst geringe Mengen an Farbmitteln zur Einstellung der gewünschten Farbe benötigt werden, was z.B. durch eine niedrigere Opazität des Polymermaterials und gegebenenfalls eine hellere Farbe im nicht eingefärbten Zustand (niedriger Yellowness-Index) erreicht werden kann.

Bei Anwendung der Technologie der Emulsionspolymerisation wird üblicherweise versucht, die gewünschten Eigenschaften durch Kombinieren verschiedener Pfropfkautschukkomponenten mit einer thermoplastischen Harzmatrix zu erreichen.

So beschreiben z.B. die DE-A 24 20 357 und DE-A 24 20 358 die Verwendung spezieller durch Persulfat-Initiierung erhaltener Pfropfpolymerisate mit definierten Werten für u.a. Kautschukgehalte, Teilchengröße, Pfropfgrad, Styrol:Acrylnitril-Verhältnis in den Pfropfpolymeren und im eingesetzten Styrol/Acrylnitril-Copolymerisat zur Erzielung verbesserter Werte für Zähigkeit, Verarbeitbarkeit und Oberflächenglanz. Trotz der relativ komplizierten Herstellung dieser Formmassen werden keine optimalen Zähigkeits-/Fließfähigkeits- und Zähigkeits/Glanz-Relationen sowie nur ungenügende Eigenfarben erreicht.

Ähnliche Probleme zeigen sich bei den gemäß EP-A 470 229, EP-A 473 400 und WO 91/13118 hergestellten Produkten, wobei durch Kombination eines durch Redox-Initiierung erhaltenen Pfropfpolymeren mit geringem Kautschukgehalt und niedrigem Teilchendurchmesser mit einem durch Redox-Initiierung erhaltenen Pfropfpolymeren mit hohem Kautschukgehalt und größerem Teilchendurchmesser stoßresistente, hochglänzende thermoplastische Harze erhalten werden. Die thermoplastischen Fließfähigkeiten sowie die Opazitäten dieser Formmassen erfüllen jedoch nicht die ständig steigenden Anforderungen an derartige Materialien.

In DE-A 41 13 326 werden thermoplastische Formmassen mit zwei unterschiedlichen Pfropfprodukten beschrieben, wobei die Kautschukgehalte der Pfropfkautschuke jeweils maximal 30 Gew.-% betragen. Genauere Angaben zu den Eigenschaften sind der Schrift nicht zu entnehmen; die Variabilität der Produkte bzw. der Produkteigenschaften dürfte aufgrund der niedrigen Kautschukgehalte der Pfropfpolymerisate jedoch stark eingeschränkt sein.

DE-A 196 49 255 lehrt die Herstellung von ABS-Formmassen mit sehr hohen Glanzzahlen unter Beibehaltung guter Werte für Zähigkeit und Verarbeitbarkeit, wobei eine Kombination eines durch Persulfat-Initiierung hergestellten grobteiligen Pfropfpolymerisats und eines durch Persulfat-Initiierung hergestellten feinteiligen Pfropf polymerisats unter Einhaltung spezieller Werte für Teilchengrößenverteilung und Gelgehalt der verwendeten Kautschuke zum Einsatz kommt.

Nachteile dieser Produkte sind neben der notwendigen Einhaltung zahlreicher Parameter bei der Herstellung die nicht immer ausreichenden Zähigkeitswerte sowie ungenügende Eigenfarbe und zu hohe Opazität.

Es bestand daher die Aufgabe, Zusammensetzungen bzw. thermoplastische Formmassen vom ABS-Typ bereitzustellen, bei denen die oben genannten Nachteile nicht auftreten, die eine Kombination aus guter Zähigkeit und verminderter Opazität aufweisen und deren sonstige Eigenschaften nicht negativ beeinflußt werden sollen.

Bereits geringe Verringerungen der Opazität, die sich sehr genau bestimmen läßt, führen zu einer merklichen Verringerung der zum Einfärben der Formmasse nötigen Pigmentmenge.

Gegenstand der Erfindung sind Zusammensetzungen enthaltend

A) mindestens einen Pfropfkautschuk hergestellt durch radikalische Emulsionspolymerisation von mindestens einem Vinylmonomeren, vorzugsweise von Styrol und Acrylnitril im Gewichtsverhältnis 90:10 bis 50:50, wobei Styrol und/ oder Acrylnitril ganz oder teilweise ersetzt werden kann durch $\alpha$-Methylstyrol, Methylmethacrylat oder N-Phenyhnaleinimid, besonders bevorzugt von Styrol und Acrylnitril in Gegenwart mindestens eines in Latexform vorliegenden Kautschuks a) mit einer Glasübergangstemperatur unter 0°C, vorzugsweise eines in Latexform vorliegenden Butadienkautschuks, besonders bevorzugt Polybutadien, unter Verwendung von mindestens einer Peroxodisulfatverbindung als Initiator,

B) mindestens einen Pfropfkautschuk hergestellt durch radikalische Emulsionspolymerisation von mindestens einem Vinylmonomeren, vorzugsweise von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, besonders bevorzugt von Styrol und Acrylnitril in Gegenwart mindestens eines in Latexform vorliegenden Kautschuks b) mit einer Glasübergangstemperatur unter 0°C, vorzugsweise eines in Latexform vorliegenden Butadienkautschuks, besonders bevorzugt Polybutadien, unter Verwendung von mindestens einem Redox-System als Initiator und gegebenenfalls

C) mindestens ein thermoplastisches kautschukfreies Polymerisat erhalten durch Polymerisation von mindestens einem harzbildenden Vinylmonomeren, vorzugsweise von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid.

Im allgemeinen können die erfindungsgemäßen Zusammensetzungen die Pfropfkautschuke A) und B) in beliebigen Mengenanteilen, üblicherweise im Bereich 5 bis 95 Gew.-Teile A) und 95 bis 5 Gew.-Teile B), enthalten; bevorzugt sind 20 bis 90 Gew.-Teile A) und 10 bis 80 Gew.-Teile B), besonders bevorzugt sind 30 bis 80 Gew.-Teile A) und 20 bis 70 Gew.-Teile B), ganz besonders bevorzugt sind 40 bis 75 Gew.-Teile A) und 25 bis 60 Gew.-Teile B) (jeweils bezogen auf 100 Gew.-Teile A+B).

Das gegebenenfalls einzusetzende thermoplastische kautschukfreie Vinylpolymerisat C) kann in Mengen von 50 bis 2000 Gew.-Teilen, vorzugsweise 100 bis 1500 Gew.-Teilen und besonders bevorzugt 150 bis 1000 Gew.-Teilen (jeweils bezogen auf 100 Gew.-Teile A+B) eingesetzt werden.

Die Pfropfkautschukpolymere A) und B) weisen vorzugsweise Kautschukgehalte über 50 Gew.-%, besonders bevorzugt über 55 Gew.-%, und ganz besonders bevorzugt über 58 Gew.-% auf.

Außerdem können die erfindungsgemäßen Zusammensetzungen weitere kautschukfreie nicht aus Vinylmonomeren aufgebaute Thermoplastharze enthalten, wobei man diese Thermoplastharze in Mengen bis zu 1000 Gew.-Teilen, vorzugsweise bis zu 700 Gew.-Teilen und besonders bevorzugt bis zu 500 Gew.-Teilen (jeweils bezogen auf 100 Gew.-Teile A+B+C) verwendet.

Der zur Herstellung des Pfropfkautschuks A) eingesetzte in Latexform vorliegende Kautschuk a) als auch der zur Herstellung des Pfropfkautschuks B) eingesetzte in Latexform vorliegende Kautschuk b) können in Form von Latices mit monomodaler, bimodaler, trimodaler oder multimodaler Teilchengrößenverteilung vorliegen.

Bevorzugt sind solche Kombinationen von Pfropfkautschuken A) und B), bei deren Herstellung mindestens einer der eingesetzten Kautschuklatices a) und b) eine bimodale oder trimodale Teilchengrößenverteilung aufweist.

Besonders bevorzugt sind solche Kombinationen von Pfropfkautschuken A) und B), bei deren Herstellung der eingesetzte Kautschuklatex a) eine monomodale Teilchengrößenverteilung und der eingesetzte Kautschuklatex b) eine bimodale Teilchengrößenverteilung aufweist oder bei deren Herstellung der eingesetzte Kautschuklatex a) eine monomodale Teilchengrößenverteilung und der eingesetzte Kautschuklatex b) eine trimodale Teilchengrößenverteilung aufweist oder bei deren Herstellung der eingesetzte Kautschuklatex a) eine bimodale Teilchengrößenverteilung und der eingesetzte Kautschuklatex b) eine bimodale Teilchengrößenverteilung aufweist oder bei deren Herstellung der eingesetzte Kautschuklatex a) eine bimodale Teilchengrößenverteilung und der eingesetzte Kautschuklatex b) eine trimodale Teilchengrößenverteilung aufweist oder bei deren Herstellung der eingesetzte Kautschuklatex a) eine bimodale Teilchengrößenverteilung und der eingesetzte Kautschuklatex b) eine monomodale Teilchengrößenverteilung aufweist.

Ganz besonders bevorzugt sind solche Kombinationen von Pfropfkautschuken A) und B), bei deren Herstellung der eingesetzte Kautschuklatex a) eine monomodale Teilchengrößenverteilung und der eingesetzte Kautschuklatex b) eine bimodale Teilchengrößenverteilung aufweist oder bei deren Herstellung der eingesetzte Kautschuklatex a) eine bimodale Teilchengrößenverteilung und der eingesetzte Kautschuklatex b) eine bimodale Teilchengrößenverteilung aufweist. Die mittleren Teilchendurchmesser ($d_{50}$-Wert) der zur Herstellung der Pfropfkautschuke A) und B) eingesetzten monomodalen, bimodalen, trimodalen oder multimodalen Kautschuklatices a) und b) können in weiten Bereichen variiert werden. Geeignete Teilchendurchmesser liegen z.B. zwischen 50 und 600 nm, vorzugsweise zwischen 80 und 550 nm und besonders bevorzugt zwischen 100 und 500 nm.

Vorzugsweise sind die mittleren Teilchendurchmesser ($d_{50}$) der eingesetzten Kautschuklatices a) kleiner als die mittleren Teilchendurchmesser ($d_{50}$) der eingesetzten Kautschuklatices b), besonders bevorzugt unterscheiden sich die mittleren Teilchendurchmesser der eingesetzten Kautschuklatices a) und b) um mindestens 40 nm, ganz besonders bevorzugt um mindestens 80 nm.

Zur Herstellung der Pfropfkautschuke gemäß Komponente A) und Komponente B) geeignete in Latexform vorliegende Kautschuke a) und b) sind prinzipiell alle Kautschukpolymerisate mit einer Glasübergangstemperatur unter 0°C. Beispiele für derartige Kautschukpolymerisate sind Polydiene wie z.B. Polybutadien und Polyisopren, Alkylacrylatkautschuke auf der Basis von $C_1$-$C_8$-Alkylacrylaten wie z.B. Poly-n-butylacrylat, Polysiloxankautschuke wie z.B. Produkte auf Basis von Polydimethylsiloxan.

Bevorzugte Kautschuke a) und b) zur Herstellung der Pfropfkautschuke A) und B) sind Butadienpolymerisatlatices, die durch Emulsionspolymerisation von Butadien hergestellt werden können. Dieses Polymerisationsverfahren

ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-%, vorzugsweise bis zu 30 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispielhaft und bevorzugt für solche Monomere werden Isopren, Chloropren, Acrylnitril, Styrol, $\alpha$-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol genannt; vorzugsweise wird Butadien alleine eingesetzt. Es ist bei der Herstellung von a) und b) auch möglich, nach bekannten Methoden zunächst ein feinteiliges Butadienpolymerisat herzustellen und es anschließend in bekannter Weise zur Einstellung der erforderlichen Teilchengröße zu agglomerieren. Einschlägige Techniken sind beschrieben (vergl. EP-A 0 029 613; EP-A 0 007 810; DD-A 144 415; DE-A 12 33 131; DE-A 12 58 076; DE-A 21 01 650; US-A 1 379 391).

Prinzipiell kann man die Kautschuklatices a) und b) auch herstellen durch Emulgieren von feinteiligen Kautschukpolymerisaten in wässrigen Medien (vergl. japanische Patentanmeldung 55 125 102).

Zur Herstellung von Kautschuklatices a) bzw. b) mit bimodalen, trimodalen oder multimodalen Teilchengrößenverteilungen werden vorzugsweise monomodale Kautschuklatices unterschiedlicher mittlerer Teilchengröße und enger Teilchengrößenverteilung miteinander vermischt.

Unter monomodalen Kautschuklatices mit enger Teilchengrößenverteilung im Sinne der Erfindung werden solche Latices verstanden, die eine Breite der Teilchengrößenverteilung (gemessen als $d_{90}$-$d_{10}$ aus der integralen Teilchengrößenverteilung) von 30 bis 150 nm, vorzugsweise von 35 bis 100 nm und besonders bevorzugt von 40 bis 80 nm aufweisen.

Die Unterschiede der mittleren Teilchendurchmesser ($d_{50}$-Wert aus der integralen Teilchengrößenverteilung) der zur Abmischung verwendeten Kautschuklatices bei der bevorzugten Erzeugung bimodaler, trimodaler oder multimodaler Teilchengrößenverteilungen betragen vorzugsweise mindestens 30 nm, besonders bevorzugt mindestens 60 nm und ganz besonders bevorzugt mindestens 80 nm.

Bevorzugt werden monomodale Kautschuklatices mit enger Teilchengrößenverteilung durch Emulsionspolymerisation geeigneter Monomerer, vorzugsweise Butadien enthaltender Monomermischungen, besonders bevorzugt Butadien, nach der sogenannten Saatpolymerisationstechnik hergestellt, bei der zunächst ein feinteiliges Polymerisat, vorzugsweise ein Kautschukpolymerisat, besonders bevorzugt ein Butadienpolymerisat, als Saatlatex hergestellt und dann durch Weiterumsatz mit kautschukbildenden Monomeren, vorzugsweise mit Butadien enthaltenden Monomeren, zu größeren Teilchen weiterpolymerisiert wird (siehe z.B. im Houben-Weyl, Methoden der Organischen Chemie, Makromolekulare Stoffe Teil 1, S.339 (1961), Thieme Verlag Stuttgart).

Dabei wird vorzugsweise unter Verwendung des Saat-Batch-Verfahrens oder des Saat-Zulauf-Verfahrens gearbeitet.

Die Gelgehalte der zur Herstellung der Pfropfkautschuke A) und B) eingesetzten Kautschuklatices a) und b) sind in der Regel unkritisch und können in weiten Bereichen variiert werden. Üblicherweise werden Werte zwischen ca. 30 % und 98 %, vorzugsweise zwischen 40 % und 95 %, eingestellt.

Vorzugsweise sind die Gelgehalte der eingesetzten Kautschuklatices a) höher als die Gelgehalte der eingesetzten Kautschuklatices b), besonders bevorzugt unterscheiden sich die Gelgehalte der eingesetzten Kautschuklatices a) und b) um mindestens 5 %, ganz besonders bevorzugt um mindestens 10 %.

Die Bestimmung des mittleren Teilchendurchmessers $d_{50}$ sowie die $d_{10}$- und $d_{90}$-Werte können durch Ultrazentrifugenmessung ermittelt werden (vgl. W. Scholtan, H. Lange: Kolloid Z. u. Z. Polymere 250, S. 782 bis 796 (1972) ), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Kautschuklatices a) und b) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Pfropfpolymerisation bei der Herstellung der Pfropfkautschuke A) und B) kann so durchgeführt werden, dass das Monomerengemisch portionsweise oder kontinuierlich zu dem Kautschuklatex a) bzw. zu dem Kautschuklatex b) gegeben und polymerisiert wird.

Dabei werden bevorzugt spezielle Monomer : Kautschuk-Verhältnisse eingehalten.

Zur Erzeugung des erfindungsgemäßen Pfropfkautschuks A) müssen anorganische Persalze, ausgewählt aus

Ammoniumperoxodisulfat, Kaliumperoxodisulfat, Natriumperoxodisulfat oder Mischungen daraus verwendet werden.

Die Reaktionstemperatur bei der Herstellung des erfindungsgemäßen Pfropfkautschuks A) kann in weiten Grenzen variiert werden. Sie beträgt im allgemeinen 25°C bis 160°C, vorzugsweise 40°C bis 100°C und besonders bevorzugt 50°C bis 90°C, wobei der Temperaturunterschied zwischen Beginn und Ende der Reaktion mindestens 10°C, vorzugsweise mindestens 15°C und besonders bevorzugt mindestens 20°C beträgt.

Zur Erzeugung des erfindungs gemäßen Pfropfkautschuks B) muß mindestens ein Redox-System als Initiator verwendet werden.

Erfindungsgemäß geeignete Redoxinitiatorsysteme bestehen in der Regel aus einem organischen Oxidationsmittel und einem Reduktionsmittel, wobei im Reaktionsmedium zusätzlich Schwermetallionen vorhanden sein können; vorzugsweise wird ohne Schwermetallionen gearbeitet.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid. $H_2O_2$ kann ebenfalls verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit®C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan (III)-salzen wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit®C).

Die Menge an Redoxinitiator-Komponente verteilt sich auf Oxidations- und Reduktionsmittel wie folgt:

Die Einsatzmenge an Oxidationsmittel beträgt im allgemeinen 0,05 bis 2,0 Gew.-%, vorzugsweise von 0,1 bis 1,5 Gew.-% und besonders bevorzugt von 0,2 bis 1,2 Gew.-%. Die Menge an Reduktionsmittel beträgt im allgemeinen 0,05 bis 1,5 Gew.-%, vorzugsweise von 0,08 bis 1,2 Gew.-% und besonders bevorzugt von 0,1 bis 1,0 Gew.-%.

Üblicherweise werden die Redoxinitiatorkomponenten in Form wässriger Lösungen, wässriger Emulsionen, wässriger Suspensionen oder sonstiger wässriger Dispersionen eingesetzt.

Die Reaktionstemperatur bei der Herstellung des erfindungsgemäßen Pfropfkautschuks B) kann in weiten Grenzen variiert werden. Sie beträgt im allgemeinen 25°C bis 120°C, vorzugsweise 35°C bis 100°C und besonders bevorzugt 40°C bis 85°C, wobei der Temperaturunterschied zwischen Beginn und Ende der Reaktion mindestens 10°C, vorzugsweise mindestens 15°C und besonders bevorzugt mindestens 20°C beträgt.

Zur Erzeugung des erfindungsgemäßen Pfropfkautschuks A) werden vorzugsweise 20 bis 60 Gew.-Teile, besonders bevorzugt 25 bis 50 Gew.-Teile, mindestens eines Vinylmonomeren, vorzugsweise eines Gemisches aus Styrol und Acrylnitril, wobei Styrol und/oder Acrylnitril ganz oder teilweise ersetzt werden kann durch $\alpha$-Methylstyrol, Methylmethacrylat oder N-Phenylmaleinimid, in Gegenwart von vorzugsweise 40 bis 80 Gew.-Teilen, besonders bevorzugt 50 bis 75 Gew.-Teilen (jeweils bezogen auf Feststoff) eines Kautschuklatex a) polymerisiert.

Zur Erzeugung des erfindungsgemäßen Pfropfkautschuks B) werden vorzugsweise 25 bis 70 Gew.-Teile, besonders bevorzugt 30 bis 60 Gew.-Teile, mindestens eines Vinylmonomeren, vorzugsweise eines Gemisches aus Styrol und Acrylnitril, wobei Styrol und/oder Acrylnitril ganz oder teilweise ersetzt werden kann durch $\alpha$-Methylstyrol, Methylmethacrylat oder N-Phenylmaleinimid, in Gegenwart von vorzugsweise 30 bis 75 Gew.-Teilen, besonders bevorzugt 40 bis 70 Gew.-Teilen (jeweils bezogen auf Feststoff) eines Kautschuklatex b) polymerisiert.

Die bei diesen Pfropfpolymerisationen eingesetzten Monomeren sind vorzugsweise Mischungen aus Styrol und Acrylnitril im Gew.-Verhältnis 90:10 bis 50:50, besonders bevorzugt im Gew.-Verhältnis 80:20 bis 65:35.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, *t*-Dodecylmercaptan; dimeres $\alpha$-Methylstyrol; Terpinolen.

Als kautschukfreie Copolymerisate C) werden vorzugsweise Copolymerisate des Styrols und Acrylnitrils im Gewichtsverhältnis 95:5 bis 50:50 verwendet, wobei Styrol und/oder Acrylnitril ganz oder teilweise durch $\alpha$-Methylstyrol, Methylmethacrylat oder N-Phenylmaleinimid ersetzt werden kann.

Besonders bevorzugt sind Copolymerisate C) mit Anteilen an eingebauten Acrylnitril-Einheiten < 30 Gew.%.

Diese Copolymerisate besitzen vorzugsweise mittlere Molekulargewichte $\overline{M}_w$ von 20 000 bis 200 000 bzw. Grenzviskositäten [$\eta$] von 20 bis 110 ml/g (gemessen in Dimethylformamid bei 25°C).

Einzelheiten zur Herstellung dieser Harze sind beispielsweise in der DE-A 2 420 358 und der DE-A 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Zusammensetzungen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (I) und (II)

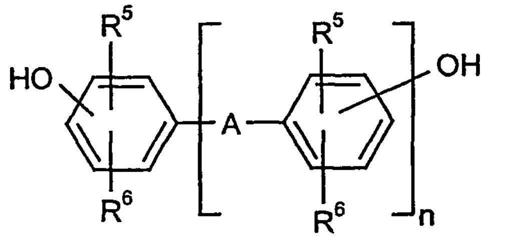

(I)

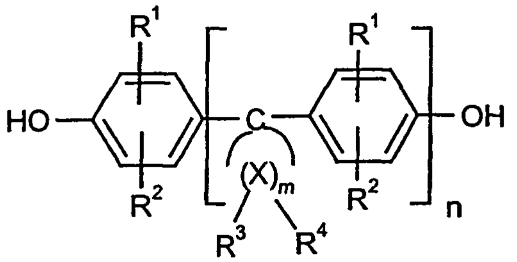

(II)

worin

A eine Einfachbindung, $C_1$-$C_5$-Alkylen, $C_2$-$C_5$-Alkyliden, $C_5$-$C_6$-Cycloalkyliden, -O-, -S-, -SO-, -$SO_2$- oder -CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

X Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-A 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-A 1 900 270 und der US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring,

gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethyleyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Bevorzugte erfindungsgemäße Zusammensetzungen enthalten 1 bis 60 Gew.-Teile, vorzugsweise 5 bis 50 Gew.-Teile Pfropfkautschukkomponenten A) + B) und 40 bis 99 Gew.-Teile, vorzugsweise 50 bis 95 Gew.-Teile kautschukfreies thermoplastisches Polymerisat C).

Falls zusätzlich weitere kautschukfreie nicht aus Vinylmonomeren aufgebaute Thermoplastharze verwendet werden, beträgt deren Menge bis zu 1000 Gew.-Teile, vorzugsweise bis zu 700 Gew.-Teile und besonders bevorzugt bis zu 500 Gew.-Teile (jeweils bezogen auf 100 Gew.-Teile A+B+C).

Die Herstellung der erfindungsgemäßen Zusammensetzungen erfolgt durch Vermischen der Komponenten A), B) und C) und gegebenenfalls weiteren Bestandteilen auf üblichen Mischaggregaten (vorzugsweise auf Mehrwalzenstühlen, Mischextrudern oder Innenknetern).

Gegenstand der Erfindung ist daher weiterhin ein Verfahren zur Herstellung der erfindungsgemäßen Zusammensetzungen, wobei man die Komponenten A), B) und C) und gegebenenfalls weitere Bestandteile vermischt und bei erhöhter Temperatur, im allgemeinen bei Temperaturen von 150 bis 300°C, compoundiert und extrudiert.

Den erfindungsgemäßen Zusammensetzungen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoff (Glasfasern, Kohlefasern etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen oder Kalander-Verarbeitung.

## Beispiele

In den folgenden Beispielen sind die angegebenen Teile immer Gewichtsteile und die angegebenen % immer Gew.-%, wenn nicht anders angegeben.

## Eingesetzte Komponenten

A) <u>Unter Verwendung von Peroxodisulfatverbindungen als Initiator hergestellte Pfropfkautschuke</u>

A 1) 60 Gew.-Teile (gerechnet als Feststoff) eines durch radikalische Polymerisation hergestellten anionisch emulgierten monomodalen Polybutadienlatex mit einem mittleren Teilchendurchmesser $d_{50}$ von 112 nm und einem Gelgehalt von 91 Gew.-% werden mit Wasser auf einen Feststoffgehalt von ca. 20 Gew.-% gebracht. Danach wird auf 59°C erwärmt und mit 0,45 Gew.-Teilen $K_2S_2O_8$ (gelöst in Wasser) versetzt. Dann werden innerhalb von 6 h parallel 40 Gew.-Teile eines Monomerengemisches (Gew.-Verhältnis Styrol : Acrylnitril = 73 : 27), 0,12 Gew.-Teile tert.-Dodecylmercaptan und 1,0 Gew.-Teile (gerechnet als Festsubstanz) des Natriumsalzes eines Harzsäuregemisches (Dresinate®731, Abieta Chemie GmbH, Gersthofen), gelöst in alkalisch eingestelltem Wasser, zudosiert.
Die Reaktionstemperatur wird innerhalb der 6 h auf 80°C angehoben, wonach sich eine 2-stündige Nachreaktionszeit bei dieser Temperatur anschließt. Nach Zugabe von ca. 1 Gew.-Teil eines phenolischen Antioxidans wird mit einem Magnesiumsulfat/Essigsäure-Gemisch koaguliert und nach dem Waschen mit Wasser das resultierende Pulver bei 70°C getrocknet.

A 2) Die unter A 1) beschriebene Prozedur wird wiederholt, wobei ein bimodaler Polybutadienlatex mit einem mittleren Teilchendurchmesser $d_{50}$ von 158 nm (Teilchengrößenpeaks bei 112 nm und bei 285 nm) und einem Gelgehalt von 86 Gew.-% verwendet wird.

A 3) Die unter A 1) beschriebene Prozedur wird wiederholt, wobei ein bimodaler Polybutadienlatex mit einem mittleren Teilchendurchmesser $d_{50}$ von 202 nm (Teilchengrößenpeaks bei 112 nm und bei 285 nm) und einem Gelgehalt von 82 Gew.-% verwendet wird.

A 4) Die unter A 1) beschriebene Prozedur wird wiederholt, wobei ein monomodaler Polybutadienlatex mit einem mittleren Teilchendurchmesser $d_{50}$ von 191 nm und einem Gelgehalt von 69 Gew.-% verwendet wird.

A 5) Die unter A 1) beschriebene Prozedur wird wiederholt, wobei ein bimodaler Polybutadienlatex mit einem mittleren Teilchendurchmesser $d_{50}$ von 216 nm (Teilchengrößenpeaks bei 191 nm und bei 285 nm) und einem Gelgehalt von 70 Gew.-% verwendet wird.

A 6) Die unter A 1) beschriebene Prozedur wird wiederholt, wobei ein bimodaler Polybutadienlatex mit einem mittleren Teilchendurchmesser $d_{50}$ von 240 nm (Teilchengrößenpeaks bei 191 nm und bei 285 nm) und einem Gelgehalt von 71 Gew.-% verwendet wird.

A 7) Die unter A 1) beschriebene Prozedur wird wiederholt, wobei ein bimodaler Polybutadienlatex mit einem mittleren Teilchendurchmesser $d_{50}$ von 245 nm (Teilchengrößenpeaks bei 199 nm und bei 285 nm) und einem Gelgehalt von 81 Gew.-% verwendet wird.

A 8) Die unter A 1) beschriebene Prozedur wird wiederholt, wobei ein monomodaler Polybutadienlatex mit einem mittleren Teilchendurchmesser $d_{50}$ von 285 nm und einem Gelgehalt von 72 Gew.-% verwendet wird.

A 9) Die unter A 1) beschriebene Prozedur wird wiederholt, wobei ein bimodaler Polybutadienlatex mit einem mittleren Teilchendurchmesser $d_{50}$ von 350 nm (Teilchengrößenpeaks bei 285 nm und bei 415 nm) und einem Gelgehalt von 70 Gew.-% verwendet wird.

A 10) Die unter A 1) beschriebene Prozedur wird wiederholt, wobei ein monomodaler Polybutadienlatex mit einem mittleren Teilchendurchmesser $d_{50}$ von 415 nm und einem Gelgehalt von 70 Gew.-% verwendet wird.

A 11) Die unter A 6) beschriebene Prozedur wird wiederholt, wobei 65 Gew.-Teile (gerechnet als Feststoff) des bimodalen Polybutadienlatex, 35 Gew.-Teile eines Monomerengemisches (Gew.-Verhältnis Styrol : Acrylnitril = 73 : 27) und 0,10 Gew.-Teile tert.-Dodecylmercaptan eingesetzt werden.

A 12) Die unter A 6) beschriebene Prozedur wird wiederholt, wobei 70 Gew.-Teile (gerechnet als Feststoff) des bimodalen Polybutadienlatex, 30 Gew.-Teile eines Monomerengemisches (Gew.-Verhältnis Styrol : Acrylnitril = 73 : 27) und 0,08 Gew.-Teile tert.-Dodecylmercaptan eingesetzt werden.

B) <u>Unter Verwendung von Redox-Initiator-Systemen hergestellte Pfropfkautschuke</u>

B 1) 60 Gew.-Teile (gerechnet als Feststoff) eines durch radikalische Polymerisation hergestellten anionisch emulgierten monomodalen Polybutadienlatex mit einem mittleren Teilchendurchmesser $d_{50}$ von 285 nm und einem Gelgehalt von 72 Gew.-% werden mit Wasser auf einen Feststoffgehalt von ca. 20 Gew.-% gebracht. Danach wird auf 75°C erwärmt, wonach innerhalb von 8 h parallel 0,26 Gew.-Teile tert.-Butylhydroperoxid und 0,22 Gew.-Teile Natriumascorbat sowie innerhalb von 4 h 40 Gew.-Teile eines Monomerengemisches (Gew.-Verhältnis Styrol : Acrylnitril = 73 : 27) zudosiert werden und die Temperatur innerhalb der ersten 4 h bei 75°C gehalten und danach auf 80°C angehoben wird.
Parallel zu den Monomeren werden 1,72 Gew.-Teile (gerechnet als Festsubstanz) des Natriumsalzes eines Harzsäuregemisches (Dresinate®731, Abieta Chemie GmbH, Gersthofen) über 4 h zudosiert.
Nach einer einstündigen Nachreaktionszeit bei 80°C wird ca. 1 Gew.-Teil eines phenolischen Antioxidans zugesetzt, mit einem Magnesiumsulfat/Essigsäure-Gemisch koaguliert und nach dem Waschen mit Wasser das resultierende Pulver bei 70°C getrocknet.

B 2) Die unter B 1) beschriebene Prozedur wird wiederholt, wobei ein bimodaler Polybutadienlatex mit einem mittleren Teilchendurchmesser $d_{50}$ von 350 nm (Teilchengrößenpeaks bei 285 nm und bei 415 nm) und einem Gelgehalt von 70 Gew.-% verwendet wird.

B 3) Die unter B 1) beschriebene Prozedur wird wiederholt, wobei ein monomodaler Polybutadienlatex mit einem mittleren Teilchendurchmesser $d_{50}$ von 415 nm und einem Gelgehalt von 70 Gew.-% verwendet wird.

B 4) Die unter B 1) beschriebene Prozedur wird wiederholt, wobei ein trimodaler Polybutadienlatex mit einem mittleren Teilchendurchmesser $d_{50}$ von 298 nm (Teilchengrößenpeaks bei 196 nm, 291 nm und bei 415 nm) und einem Gelgehalt von 65 Gew.-% verwendet wird.

B 5) Die unter B 1) beschriebene Prozedur wird wiederholt, wobei ein trimodaler Polybutadienlatex mit einem mittleren Teilchendurchmesser $d_{50}$ von 298 nm (Teilchengrößenpeaks bei 196 nm, 291 nm und bei 415 nm) und einem Gelgehalt von 66 Gew.-% verwendet wird.

C) Thermoplastharze

C 1) Durch Lösungspolymerisation hergestelltes Styrol/Acrylnitril-(SAN)-Copolymerharz (Gew.-Verhältnis Styrol : Acrylnitril = 72 : 28, $\overline{M}_w \approx$ 85 000, ermittelt durch Gelpermeationschromatographie).

C 2) Durch Lösungspolymerisation hergestelltes Styrol/Acrylnitril-(SAN)-Copolymerharz (Gew.-Verhältnis Styrol : Acrylnitril = 72 : 28, $\overline{M}_w \approx$ 115 000, ermittelt durch Gelpermeationschromatographie).

**Ausprüfung der Formmassen**

Die oben beschriebenen Polymerkomponenten werden in den in Tabelle 1 angegebenen Anteilen, 2 Gew.-Teilen Ethylendiaminbisstearylamid und 0,1 Gew.-Teilen eines Silikonöls in einem Innenkneter vermischt und nach Granulierung zu Prüf stäben und zu einer ebenen Platte (zur Beurteilung der Oberfläche und des Kontrastverhältnisses, Maße 60 x 40 x 2 mm) verarbeitet.
Folgende Daten werden ermittelt:

Kerbschlagzähigkeit bei Raumtemperatur ($a_k$(RT)) und bei -20°C ($a_k$(-20°C)) nach ISO 180/1A (Einheit: kJ/m$^2$),

Wärmeformbeständigkeit (Vicat B) nach DIN 53 460 (Einheit: °C),

Oberflächenglanz nach DIN 67 530 bei einem Reflektionswinkel von 20° (Reflektometerwert),

Yellowness-Index (YI) gemäß ASTM-Norm D 1925 (Lichtart: C, Beobachter: 2°, Meßöffnung: Large Area Value) nach der Gleichung YI = (128X - 106Z)/Y, mit X, Y, Z = Farbkoordinaten gemäß DIN 5033,

Kontrastverhältnis (Contrast Ratio CR) als Maßzahl für die Opazität des Materials durch Messung einer Probe vor einem schwarzen und einem weißen Hintergrund gemäß

$$CR = \frac{Y\ (\text{vor schwarzem Hintergrund})}{Y\ (\text{vor weißem Hintergrund})} \times 100$$

wobei Y den Normfarbwert aus dem CIElab-Farbraum bei Lichtart D 65 und 10° Beobachter beschreibt (siehe DIN 5033, Ulbricht-Kugel). Die Messung erfolgte unter Verwendung eines Spektralphotometers Dataflash SF 600 plus CT.

Die Beurteilung der Verarbeitbarkeit der Formmassen erfolgt durch Messung des notwendigen Fülldrucks bei 240°C (Einheit: bar) (siehe S. Anders et al., Kunststoffe 81 (1991), 4, Seiten 336 bis 340 und dort zitierte Literatur).

Die Ergebnisse sind in Tabelle 2 zusammengestellt.

Daraus ist ersichtlich, dass die erfindungsgemäßen Formmassen im direkten Vergleich mit dem jeweiligen Vergleichsbeispiel deutlich verbesserte Zähigkeitswerte sowie geringere bzw. im Einzelfall gleich gute Opazitätswerte aufweisen und daher die zur Einstellung der gewünschten Farbe nötige Pigmentmenge deutlich reduziert wird. Andere wichtige Eigenschaften wie Wärmeformbeständigkeit, thermoplastische Verarbeitbarkeit, Oberflächenglanz und Yellowness-Index werden nicht negativ beeinflußt.

**Tabelle 1:** Zusammensetzungen der ausgeprüften Formmassen

| Beispiel | A1 (Gew.-Teile) | A2 (Gew.-Teile) | A3 (Gew.-Teile) | A4 (Gew.-Teile) | A5 (Gew.-Teile) | A6 (Gew.-Teile) | A7 (Gew.-Teile) | A8 (Gew.-Teile) | A9 (Gew.-Teile) | A10 (Gew.-Teile) | A11 (Gew.-Teile) | A12 (Gew.-Teile) | B1 (Gew.-Teile) | B2 (Gew.-Teile) | B3 (Gew.-Teile) | B4 (Gew.-Teile) | B5 (Gew.-Teile) | C1 (Gew.-Teile) | C2 (Gew.-Teile) |
|---|---|---|---|---|---|---|---|---|---|---|---|---|---|---|---|---|---|---|---|
| 1 | 16.2 | – | – | – | – | – | – | – | – | – | – | – | 10.8 | – | – | – | – | 73 | – |
| 2 (Vergleich) | 16.2 | – | – | – | – | – | – | 10.8 | – | – | – | – | – | – | – | – | – | 73 | – |
| 3 | – | 16.2 | – | – | – | – | – | – | – | – | – | – | 10.8 | – | – | – | – | 73 | – |
| 4 (Vergleich) | – | 16.2 | – | – | – | – | – | 10.8 | – | – | – | – | – | – | – | – | – | 73 | – |
| 5 | – | – | 16.2 | – | – | – | – | – | – | – | – | – | 10.8 | – | – | – | – | 73 | – |
| 6 (Vergleich) | – | – | 16.2 | – | – | – | – | 10.8 | – | – | – | – | – | – | – | – | – | 73 | – |
| 7 | – | – | – | 16.2 | – | – | – | – | – | – | – | – | 10.8 | – | – | – | – | 73 | – |
| 8 (Vergleich) | – | – | – | 16.2 | – | – | – | 10.8 | – | – | – | – | – | – | – | – | – | 73 | – |
| 9 | – | – | – | – | 16.2 | – | – | – | – | – | – | – | 10.8 | – | – | – | – | 73 | – |
| 10 (Vergleich) | – | – | – | – | 16.2 | – | – | 10.8 | – | – | – | – | – | – | – | – | – | 73 | – |
| 11 | – | – | – | – | – | 16.2 | – | – | – | – | – | – | 10.8 | – | – | – | – | 73 | – |
| 12 (Vergleich) | – | – | – | – | – | 16.2 | – | 10.8 | – | – | – | – | – | – | – | – | – | 73 | – |
| 13 | 16.2 | – | – | – | – | – | – | – | – | – | – | – | – | 10.8 | – | – | – | 73 | – |
| 14 (Vergleich) | 16.2 | – | – | – | – | – | – | – | 10.8 | – | – | – | – | – | – | – | – | 73 | – |
| 15 | – | 16.2 | – | – | – | – | – | – | – | – | – | – | – | 10.8 | – | – | – | 73 | – |

| Beispiel | A1 (Gew.-Teile) | A2 (Gew.-Teile) | A3 (Gew.-Teile) | A4 (Gew.-Teile) | A5 (Gew.-Teile) | A6 (Gew.-Teile) | A7 (Gew.-Teile) | A8 (Gew.-Teile) | A9 (Gew.-Teile) | A10 (Gew.-Teile) | A11 (Gew.-Teile) | A12 (Gew.-Teile) | B1 (Gew.-Teile) | B2 (Gew.-Teile) | B3 (Gew.-Teile) | B4 (Gew.-Teile) | B5 (Gew.-Teile) | C1 (Gew.-Teile) | C2 (Gew.-Teile) |
|---|---|---|---|---|---|---|---|---|---|---|---|---|---|---|---|---|---|---|---|
| 16 (Vergleich) | – | 16.2 | – | – | – | – | – | – | 10.8 | – | – | – | – | – | – | – | – | 73 | – |
| 17 | – | – | 16.2 | – | – | – | – | – | – | – | – | – | – | 10.8 | – | – | – | 73 | – |
| 18 (Vergleich) | – | – | 16.2 | – | – | – | – | – | 10.8 | – | – | – | – | – | – | – | – | 73 | – |
| 19 | – | – | – | 16.2 | – | – | – | – | – | – | – | – | – | 10.8 | – | – | – | 73 | – |
| 20 (Vergleich) | – | – | – | 16.2 | – | – | – | – | 10.8 | – | – | – | – | – | – | – | – | 73 | – |
| 21 | – | – | – | – | 16.2 | – | – | – | – | – | – | – | – | 10.8 | – | – | – | 73 | – |
| 22 (Vergleich) | – | – | – | – | 16.2 | – | – | – | 10.8 | – | – | – | – | – | – | – | – | 73 | – |
| 23 | – | – | – | – | – | 16.2 | – | – | – | – | – | – | – | 10.8 | – | – | – | 73 | – |
| 24 (Vergleich) | – | – | – | – | – | 16.2 | – | – | 10.8 | – | – | – | – | – | – | – | – | 73 | – |
| 25 | – | – | – | – | – | – | 16.2 | – | – | – | – | – | – | 10.8 | – | – | – | 73 | – |
| 26 (Vergleich) | – | – | – | – | – | – | 16.2 | – | 10.8 | – | – | – | – | – | – | – | – | 73 | – |
| 27 | – | – | – | – | 24.0 | – | – | – | – | – | – | – | – | 16.0 | – | – | – | – | 60 |
| 28 (Vergleich) | – | – | – | – | 24.0 | – | – | – | 16.0 | – | – | – | – | – | – | – | – | – | 60 |

| Beispiel | A1 (Gew.-Teile) | A2 (Gew.-Teile) | A3 (Gew.-Teile) | A4 (Gew.-Teile) | A5 (Gew.-Teile) | A6 (Gew.-Teile) | A7 (Gew.-Teile) | A8 (Gew.-Teile) | A9 (Gew.-Teile) | A10 (Gew.-Teile) | A11 (Gew.-Teile) | A12 (Gew.-Teile) | B1 (Gew.-Teile) | B2 (Gew.-Teile) | B3 (Gew.-Teile) | B4 (Gew.-Teile) | B5 (Gew.-Teile) | C1 (Gew.-Teile) | C2 (Gew.-Teile) |
|---|---|---|---|---|---|---|---|---|---|---|---|---|---|---|---|---|---|---|---|
| 29 | - | - | - | - | - | 24.0 | - | - | - | - | - | - | - | 16.0 | - | - | - | - | 60 |
| 30 (Vergleich) | - | - | - | - | - | 24.0 | - | - | 16.0 | - | - | - | - | - | - | - | - | - | 60 |
| 31 | 16.2 | - | - | - | - | - | - | - | - | - | - | - | - | - | 10.8 | - | - | 73 | - |
| 32 (Vergleich) | 16.2 | - | - | - | - | - | - | - | - | 10.8 | - | - | - | - | - | - | - | 73 | - |
| 33 | - | 16.2 | - | - | - | - | - | - | - | - | - | - | - | - | 10-8 | - | - | 73 | - |
| 34 (Vergleich) | - | 16.2 | - | - | - | - | - | - | - | 10.8 | - | - | - | - | - | - | - | 73 | - |
| 35 | - | - | 16.2 | - | - | - | - | - | - | - | - | - | - | - | 10.8 | - | - | 73 | - |
| 36 (Vergleich) | - | - | 16.2 | - | - | - | - | - | - | 10.8 | - | - | - | - | - | - | - | 73 | - |
| 37 | - | - | - | 16.2 | - | - | - | - | - | - | - | - | - | - | 10.8 | - | - | 73 | - |
| 38 (Vergleich) | - | - | - | 16.2 | - | - | - | - | - | 10.8 | - | - | - | - | - | - | - | 73 | - |

| Beispiel | A1 (Gew.-Teile) | A2 (Gew.-Teile) | A3 (Gew.-Teile) | A4 (Gew.-Teile) | A5 (Gew.-Teile) | A6 (Gew.-Teile) | A7 (Gew.-Teile) | A8 (Gew.-Teile) | A9 (Gew.-Teile) | A10 (Gew.-Teile) | A11 (Gew.-Teile) | A12 (Gew.-Teile) | B1 (Gew.-Teile) | B2 (Gew.-Teile) | B3 (Gew.-Teile) | B4 (Gew.-Teile) | B5 (Gew.-Teile) | C1 (Gew.-Teile) | C2 (Gew.-Teile) |
|---|---|---|---|---|---|---|---|---|---|---|---|---|---|---|---|---|---|---|---|
| 39 | - | - | - | - | 16.2 | - | - | - | - | - | - | - | - | - | 10.8 | - | - | 73 | - |
| 40 (Vergleich) | - | - | - | - | 16.2 | - | - | - | - | 10.8 | - | - | - | - | - | - | - | 73 | - |
| 41 | - | - | - | - | - | 16.2 | - | - | - | - | - | - | - | - | 10.8 | - | - | 73 | - |
| 42 (Vergleich) | - | - | - | - | - | 16.2 | - | - | - | 10.8 | - | - | - | - | - | - | - | 73 | - |
| 43 | - | - | - | - | - | 16.2 | - | - | - | - | - | - | - | - | - | 10.8 | - | 73 | - |
| 44 | - | - | - | - | - | 16.2 | - | - | - | - | - | - | - | - | - | - | 10.8 | 73 | - |
| 45 | - | - | - | - | - | - | - | - | - | - | 14.95 | - | - | 10.8 | - | - | - | 74.25 | - |
| 46 | - | - | - | - | - | - | - | - | - | - | 14.95 | - | - | - | - | 10.8 | - | 74.25 | - |
| 47 | - | - | - | - | - | - | - | - | - | - | 14.95 | - | - | - | - | - | 10.8 | 74.25 | - |
| 48 | - | - | - | - | - | - | - | - | - | - | - | 13.89 | - | 10.8 | - | - | - | 75.31 | - |
| 49 | - | - | - | - | - | - | - | - | - | - | - | 13.89 | - | - | - | 10.8 | - | 75.31 | - |
| 50 | - | - | - | - | - | - | - | - | - | - | - | 13.89 | - | - | - | - | 10.8 | 75.31 | - |

**Tabelle 2:** Prüfwerte der untersuchten Zusammensetzungen

| Beispiel | $a_k^{(RT)}$ (kJ/m$^2$) | $a_k^{(-20°C)}$ (kJ/m$^2$) | Vicat B (°C) | Fülldruck (bar) | Glanzgrad | YI | CR (%) |
|---|---|---|---|---|---|---|---|
| 1 | 10.4 | 7.1 | 104 | 138 | 92 | 38 | 72 |
| 2 (Vergleich) | 7.7 | 6.5 | 104 | 140 | 91 | 38 | 75 |
| 3 | 12.5 | 8.4 | 103 | 138 | 92 | 38 | 73 |
| 4 (Vergleich) | 10.1 | 7.7 | 103 | 139 | 91 | 37 | 76 |
| 5 | 14.3 | 9.8 | 103 | 138 | 92 | 39 | 75 |
| 6 (Vergleich) | 13.2 | 7.7 | 103 | 142 | 91 | 37 | 77 |
| 7 | 14.9 | 9.3 | 103 | 139 | 92 | 37 | 78 |
| 8 (Vergleich) | 11.3 | 9.1 | 103 | 142 | 91 | 37 | 80 |
| 9 | 15.6 | 10.1 | 103 | 140 | 91 | 39 | 78 |
| 10 (Vergleich) | 14.0 | 9.2 | 103 | 142 | 91 | 39 | 81 |
| 11 | 15.8 | 9.7 | 103 | 142 | 91 | 39 | 80 |
| 12 (Vergleich) | 14.4 | 8.3 | 103 | 144 | 92 | 39 | 80 |
| 13 | 12.2 | 8.2 | 103 | 137 | 91 | 36 | 73 |
| 14 (Vergleich) | 7.2 | 6.1 | 103 | 136 | 92 | 36 | 75 |
| 15 | 13.9 | 8.0 | 103 | 138 | 91 | 36 | 73 |
| 16 (Vergleich) | 9.0 | 6.6 | 104 | 136 | 92 | 36 | 75 |
| 17 | 15.5 | 8.1 | 103 | 140 | 91 | 34 | 74 |
| 18 (Vergleich) | 12.1 | 7.7 | 103 | 137 | 91 | 37 | 77 |
| 19 | 17.2 | 8.8 | 103 | 141 | 91 | 34 | 78 |
| 20 (Vergleich) | 12.0 | 7.5 | 103 | 139 | 91 | 37 | 80 |
| 21 | 17.5 | 8.0 | 103 | 141 | 92 | 34 | 77 |
| 22 (Vergleich) | 13.3 | 7.3 | 103 | 139 | 92 | 38 | 80 |
| 23 | 17.7 | 7.9 | 103 | 140 | 91 | 35 | 77 |
| 24 (Vergleich) | 15.2 | 7.5 | 103 | 139 | 91 | 38 | 80 |
| 25 | 16.8 | 7.8 | 104 | 139 | 92 | 35 | 76 |
| 26 (Vergleich) | 14.5 | 7.5 | 103 | 139 | 92 | 39 | 80 |
| 27 | 27.4 | 18.9 | n.b. | 188 | 92 | 33 | 83 |
| 28 (Vergleich) | 24.9 | 16.8 | n.b. | 186 | 92 | 34 | 86 |
| 29 | 28.1 | 18.5 | n.b. | 188 | 92 | 28 | 81 |
| 30 (Vergleich) | 24.8 | 16.8 | n.b. | 187 | 91 | 30 | 85 |
| 31 | 12.6 | 7.2 | 103 | 131 | 92 | 38 | 72 |
| 32 (Vergleich) | 8.8 | 7.0 | 104 | 137 | 92 | 38 | 75 |
| 33 | 17.2 | 7.8 | 103 | 128 | 91 | 37 | 74 |
| 34 (Vergleich) | 11.5 | 7.4 | 103 | 137 | 92 | 40 | 76 |
| 35 | 16.8 | 7.4 | 103 | 131 | 93 | 39 | 76 |
| 36 (Vergleich) | 13.6 | 7.4 | 103 | 134 | 92 | 40 | 77 |
| 37 | 19.0 | 8.0 | 102 | 132 | 92 | 38 | 80 |

(fortgesetzt)

| Beispiel | $a_k^{(RT)}$ (kJ/m²) | $a_k^{(-20°C)}$ (kJ/m²) | Vicat B (°C) | Fülldruck (bar) | Glanzgrad | YI | CR (%) |
|---|---|---|---|---|---|---|---|
| 38 (Vergleich) | 14.0 | 7.3 | 103 | 135 | 92 | 41 | 81 |
| 39 | 18.5 | 7.9 | 103 | 132 | 91 | 39 | 79 |
| 40 (Vergleich) | 15.1 | 7.4 | 104 | 137 | 92 | 39 | 80 |
| 41 | 18.5 | 7.7 | 103 | 132 | 93 | 39 | 79 |
| 42 (Vergleich) | 16.7 | 7.3 | 103 | 136 | 92 | 41 | 81 |
| 43 | 17.7 | 9.5 | n.b. | 128 | 94 | 33 | 77 |
| 44 | 17.5 | 9.8 | n.b. | 129 | 94 | 33 | 77 |
| 45 | 18.8 | 10.7 | n.b. | 135 | 93 | 36 | 78 |
| 46 | 17.5 | 10.5 | n.b. | 135 | 94 | 35 | 78 |
| 47 | 17.5 | 10.0 | n.b. | 129 | 93 | 34 | 78 |
| 48 | 17.5 | 10.6 | n.b. | 134 | 94 | 32 | 78 |
| 49 | 16.3 | 9.4 | n.b. | 134 | 94 | 33 | 78 |
| 50 | 17.1 | 9.7 | n.b. | 129 | 93 | 31 | 77 |
| n.b. = nicht bestimmt | | | | | | | |

**Patentansprüche**

1. Zusammensetzung enthaltend

A) mindestens einen Pfropfkautschuk hergestellt durch radikalische Emulsionspolymerisation von mindestens einem Vinylmonomeren in Gegenwart mindestens eines in Latexform vorliegenden Kautschuks a) mit einer Glasübergangstemperatur unter 0°C unter Verwendung von mindestens einer Peroxodisulfatverbindung als Initiator,
B) mindestens einen Pfropfkautschuk hergestellt durch radikalische Emulsionspolymerisation von mindestens einem Vinylmonomeren in Gegenwart mindestens eines in Latexform vorliegenden Kautschuks b) mit einer Glasübergangstemperatur unter 0°C unter Verwendung von mindestens einem Redox-System als Initiator und gegebenenfalls
C) mindestens ein thermoplastisches kautschukfreies Polymerisat erhalten durch Polymerisation von mindestens einem harzbildenden Vinylmonomeren.

2. Zusammensetzungen gemäß Anspruch 1 enthaltend

A) mindestens einen Pfropfkautschuk hergestellt durch radikalische Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid in Gegenwart mindestens eines in Latexform vorliegenden Butadienkautschuks unter Verwendung von mindestens einer Peroxodisulfatverbindung als Initiator,
B) mindestens einen Pfropfkautschuk hergestellt durch radikalische Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid in Gegenwart mindestens eines in Latexform vorliegenden Butadienkautschuks unter Verwendung von mindestens einem Redox-System als Initiator und gegebenenfalls
C) mindestens ein thermoplastisches kautschukfreies Polymerisat erhalten durch Polymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid.

3. Zusammensetzungen gemäß Anspruch 1 und 2, in denen Komponente B) hergestellt wird durch Initiierung mit

einem Redox-System, worin das Oxidationsmittel auswählt ist aus der Gruppe Di- tert.-butyl-peroxid, Cumolhydroperoxid, Dicyclohexylpercarbonat, tert.-Butylhydroperoxid, p-Menthanperoxid, $H_2O_2$ oder Mischungen hieraus, und worin das Reduktionsmittel ausgewählt ist aus der Gruppe der Salze der Sulfinsäure, Salze der schwefligen Säure, Natriumdithionit, Natriumsulfit, Natriumhyposulfit, Natriumhydrogensulfit, Ascorbinsäure sowie deren Salze, Natriumformaldehydsulfoxylat, Mono- und Dihydroxyaceton, Zucker, Glucose, Dextrose, Eisen(II)-salzen, Zinn(II)-salzen und Titan(II)-salzen oder Mischungen hieraus.

**4.** Zusammensetzungen gemäß Ansprüchen 1 bis 3, enthaltend 20 bis 90 Gew.-% A) und 10 bis 80 Gew.-% B).

**5.** Zusammensetzungen gemäß vorstehender Ansprüche enthaltend 30 bis 80 Gew.-% A) und 20 bis 70 Gew.-% B).

**6.** Zusammensetzungen gemäß Anspruch 4 enthaltend zusätzlich 50 bis 2000 Gew.-Teile C) (pro 100 Gew.-Teile A) + B)).

**7.** Zusammensetzungen gemäß Anspruch 5 enthalten zusätzlich 100 bis 1500 Gew.-Teile C) (pro 100 Gew.-Teile A) + B)).

**8.** Zusammensetzungen gemäß vorstehender Ansprüche enthaltend zusätzlich mindestens ein Harz ausgewählt aus aromatischem Polycarbonat, aromatischem Polyestercarbonat, Polyester, Polyamid oder Mischungen daraus.

**9.** Zusammensetzungen gemäß vorstehender Ansprüche, wobei zur Herstellung der Pfropfkautschuke A) und B) jeweils ein Kautschuklatex mit monomodaler Teilchengrößenverteilung eingesetzt wird.

**10.** Zusammensetzungen gemäß Ansprüchen 1 bis 8, wobei zur Herstellung der Pfropfkautschuke A) und B) jeweils ein Kautschuklatex mit bimodaler Teilchengrößenverteilung eingesetzt wird.

**11.** Zusammensetzungen gemäß Ansprüchen 1 bis 8, wobei zur Herstellung des Pfropfkautschuks A) ein Kautschuklatex mit monomodaler Teilchengrößenverteilung und zur Herstellung des Pfropfkautschuks B) ein Kautschuklatex mit bimodaler Teilchengrößenverteilung eingesetzt wird.

**12.** Zusammensetzungen gemäß Ansprüchen 1 bis 8, wobei zur Herstellung des Pfropfkautschuks A) ein Kautschuklatex mit monomodaler Teilchengrößenverteilung und zur Herstellung des Pfropfkautschuks B) ein Kautschuklatex mit trimodaler Teilchengrößenverteilung eingesetzt wird.

**13.** Zusammensetzungen gemäß Ansprüchen 1 bis 8, wobei zur Herstellungdes Pfropfkautschuks. A) ein Kautschuklatex mit bimodaler Teilchengrößenverteilung und zur Herstellung des Pfropfkautschuks B) ein Kautschuklatex mit trimodaler Teilchengrößenverteilung eingesetzt wird.

**14.** Zusammensetzungen gemäß Ansprüchen 1 bis 8, wobei zur Herstellung des Pfropfkautschuks A) ein Kautschuklatex mit bimodaler Teilchengrößenverteilung und zur Herstellung des Pfropfkautschuks B) ein Kautschuklatex mit monomodaler Teilchengrößenverteilung eingesetzt wird.

**15.** Zusammensetzungen gemäß vorstehender Ansprüche, **dadurch gekennzeichnet, dass** zur Herstellung der Pfropfkautschuke A) und B) Kautschuklatices mit mittleren Teilchendurchmessern ($d_{50}$) von 50 bis 600 nm eingesetzt werden.

**16.** Zusammensetzungen gemäß vorstehender Ansprüche, **dadurch gekennzeichnet, dass** zur Herstellung der Pfropfkautschuke A) und B) Kautschuklatices mit mittleren Teilchendurchmessern ($d_{50}$) von 100 bis 500 nm eingesetzt werden.

**17.** Zusammensetzungen gemäß Ansprüchen 15 und 16, **dadurch gekennzeichnet, dass** der mittlere Teilchendurchmesser ($d_{50}$) des zur Herstellung des Pfropfkautschuks A) eingesetzten Kautschuklatex kleiner als der mittlere Teilchendurchmesser ($d_{50}$) des zur Herstellung des Pfropfkautschuks B) eingesetzten Kautschuklatex ist.

**18.** Verwendung der Zusammensetzungen gemäß der Ansprüche 1 bis 17 zur Herstellung von Formteilen.

**19.** Formteile, erhältlich aus Zusammensetzungen gemäß der Ansprüche 1 bis 17.

**20.** Verfahren zur Herstellung von Zusammensetzungen, **dadurch gekennzeichnet, dass**

A) mindestens ein Pfropfkautschuk hergestellt durch radikalische Emulsionspolymerisation von mindestens einem Vinylmonomeren in Gegenwart mindestens eines in Latexform vorliegenden Kautschuks a) mit einer Glasübergangstemperatur unter 0°C unter Verwendung von mindestens einer Peroxodisulfatverbindung als Initiator,
B) mindestens ein Pfropfkautschuk hergestellt durch radikalische Emulsionspolymerisation von mindestens einem Vinylmonomeren in Gegenwart mindestens eines in Latexform vorliegenden Kautschuks b) mit einer Glasübergangstemperatur unter 0°C unter Verwendung von mindestens einem Redox-System als Initiator und gegebenenfalls
C) mindestens ein thermoplastisches kautschukfreies Polymerisat erhalten durch Polymerisation von mindestens einem harzbildenden Vinylmonomeren.

gemischt und anschließend compoundiert werden.

## Claims

**1.** Composition comprising

A) at least one graft rubber obtained by free-radical emulsion polymerisation of at least one vinyl monomer in the presence of at least one rubber a) that is present in the form of a latex and has a glass transition temperature below 0°C by using at least one peroxodisulfate compound as initiator,
B) at least one graft rubber obtained by free-radical emulsion polymerisation of at least one vinyl monomer in the presence of at least one rubber b) that is in the form of a latex and has a glass transition temperature below 0°C by using at least one redox system as initiator, and optionally
C) at least one thermoplastic rubber-free addition polymer obtained by addition polymerisation of at least one resin-forming vinyl monomer.

**2.** Compositions according to Claim 1 comprising

A) at least one graft rubber obtained by free-radical emulsion polymerisation of styrene and acrylonitrile in a weight ratio of 90:10 to 50:50, wherein styrene and/or acrylonitrile may be wholly or partly replaced by α-methylstyrene, methyl methacrylate or N-phenylmaleimide in the presence of at least one butadiene rubber that is in the form of a latex and using at least one peroxodisulfate compound as initiator,
B) at least one graft rubber obtained by free-radical emulsion polymerisation of styrene and acrylonitrile in a weight ratio of 90:10 to 50:50, wherein styrene and/or acrylonitrile may be wholly or partly replaced by α-methylstyrene, methyl methacrylate or N-phenylmaleimide in the presence of at least one butadiene rubber that is in the form of a latex and using at least one redox compound as initiator, and optionally
C) at least one thermoplastic rubber-free addition polymer obtained by addition polymerisation of styrene and acrylonitrile in a weight ratio of 90:10 to 50:50, wherein styrene and/or acrylonitrile may be wholly or partly replaced by α-methylstyrene, methyl methacrylate or N-phenylmaleimide.

**3.** Compositions according to Claims 1 and 2 wherein component B) is prepared by initiation with a redox system in which the oxidizing agent is selected from the group consisting of di-tert.-butyl peroxide, cumene hydroperoxide, dicyclohexyl percarbonate, tert.-butyl hydroperoxide, p-menthane hydroperoxide, $H_2O_2$ or mixtures thereof and in which the reducing agent is selected from the group consisting of salts of sulfinic acid, salts of sulfurous acid, sodium dithionite, sodium sulfite, sodium hyposulfite, sodium hydrogen sulfite, ascorbic acid and its salts, sodium formaldehydesulfoxylate, mono- and dihydroxyacetone, sugar, glucose, dextrose, iron(II) salts, tin(II) salts and titanium (II) salts or mixtures thereof.

**4.** Compositions according to Claims 1 to 3, comprising 20 to 90 wt.% of A) and 10 to 80 wt.% of B).

**5.** Compositions according to preceding claims, comprising 30 to 80 wt.% of A) and 20 to 70 wt.% of B).

**6.** Compositions according to Claim 4, further comprising 50 to 2000 parts by weight of C) (per 100 parts by weight of A) + B)).

**7.** Compositions according to Claim 5, further comprising 100 to 1500 parts by weight of C) (per 100 parts by weight of A) + B)).

**8.** Compositions according to preceding claims, further comprising at least one resin selected from the group consisting of aromatic polycarbonate, aromatic polyester carbonate, polyester, polyamide or mixtures thereof.

**9.** Compositions according to preceding claims, each of the graft rubbers A) and B) are produced using a rubber latex having a monomodal particle size distribution.

**10.** Compositions according to Claims 1 to 8, each of the graft rubbers A) and B) are produced using a rubber latex having a bimodal particle size distribution.

**11.** Compositions according to Claims 1 to 8, wherein the graft rubber A) is produced using a rubber latex having a monomodal particle size distribution and graft rubber B) is produced using a rubber latex having a bimodal particle size distribution.

**12.** Compositions according to Claims 1 to 8, wherein the graft rubber A) is produced using a rubber latex having a monomodal particle size distribution and graft rubber B) is produced using a rubber latex having a trimodal particle size distribution.

**13.** Compositions according to Claims 1 to 8, wherein the graft rubber A) is produced using a rubber latex having a bimodal particle size distribution and graft rubber B) is produced using a rubber latex having a trimodal particle size distribution.

**14.** Compositions according to Claims 1 to 8, wherein the graft rubber A) is produced using a rubber latex having a bimodal particle size distribution and graft rubber B) is produced using a rubber latex having a monomodal particle size distribution.

**15.** Compositions according to preceding claims, **characterised in that** the graft rubbers A) and B) are produced using rubber latices having median particle diameters ($d_{50}$) of 50 to 600 nm.

**16.** Compositions according to preceding claims, **characterised in that** the graft rubbers A) and B) are produced using rubber latices having median particle diameters ($d_{50}$) of 100 to 500 nm.

**17.** Compositions according to Claims 15 and 16, **characterised in that** the median particle diameter ($d_{50}$) of the rubber latex used for producing the graft rubber A) is smaller than the median particle diameter ($d_{50}$) of the rubber latex used for producing the graft rubber B).

**18.** Use of the compositions according to Claims 1 to 17 for producing moulded articles.

**19.** Moulded articles obtainable from compositions according to Claims 1 to 17.

**20.** Process for producing compositions, **characterised in that**

A) at least one graft rubber obtained by free-radical emulsion polymerisation of at least one vinyl monomer in the presence of at least one rubber a) that is present in the form of a latex and has a glass transition temperature below 0°C by using at least one peroxodisulfate compound as initiator,
B) at least one graft rubber obtained by free-radical emulsion polymerisation of at least one vinyl monomer in the presence of at least one rubber b) that is in the form of a latex and has a glass transition temperature below 0°C by using at least one redox system as initiator, and optionally
C) at least one thermoplastic rubber-free addition polymer obtained by addition polymerisation of at least one resin-forming vinyl monomer,

are mixed and subsequently compounded.

## Revendications

1. Composition contenant:

   A) au moins un caoutchouc greffé préparé par polymérisation en émulsion par voie radicalaire d'au moins un monomère de vinyle en présence d'au moins un caoutchouc a) ayant une température de transition vitreuse inférieure à 0°C, présent sous forme de latex, avec utilisation d'au moins un composé de peroxodisulfate en tant qu'amorceur,
   B) au moins un caoutchouc greffé préparé par polymérisation en émulsion par voie radicalaire d'au moins un monomère de vinyle en présence d'au moins un caoutchouc b) ayant une température de transition vitreuse inférieure à 0°C, présent sous forme de latex, avec utilisation d'au moins un système redox en tant qu'amorceur et éventuellement
   C) au moins un polymère thermoplastique exempt de caoutchouc obtenu par polymérisation d'au moins un monomère de vinyle formant une résine.

2. Compositions selon la revendication 1, contenant :

   A) au moins un caoutchouc greffé préparé par polymérisation en émulsion par voie radicalaire de styrène et d'acrylonitrile en un rapport de poids de 90:10 à 50:50, le styrène et/ou l'acrylonitrile pouvant être remplacés complètement ou partiellement par de l'$\alpha$-méthylstyrène, du méthacrylate de méthyle ou du N-phénylmaléimide en présence d'au moins un caoutchouc de butadiène présent sous forme de latex avec utilisation d'au moins un composé de peroxodisulfate en tant qu'amorceur,
   B) au moins un caoutchouc greffé préparé par polymérisation en émulsion par voie radicalaire de styrène et d'acrylonitrile en un rapport de poids de 90:10 à 50:50, le styrène et/ou l'acrylonitrile pouvant être remplacés complètement ou partiellement par de l'$\alpha$-méthylstyrène, du méthacrylate de méthyle ou du N-phénylmaléimide en présence d'au moins un caoutchouc de butadiène présent sous forme de latex avec utilisation d'au moins un système redox en tant qu'amorceur et éventuellement
   C) au moins un polymère thermoplastique exempt de caoutchouc obtenu par polymérisation de styrène et d'acrylonitrile en un rapport de poids de 90:10 à 50:50, le styrène et/ou l'acrylonitrile pouvant être remplacés complètement ou partiellement par de l'$\alpha$-méthylstyrène, du méthacrylate de méthyle ou du N-phénylmaléimide.

3. Compositions suivant la revendication 1 et 2, dans lesquelles le composant B) est préparé par amorçage avec un système redox, l'agent d'oxydation étant sélectionné parmi le groupe constitué du peroxyde de di-tert-butyle, de l'hydroperoxyde de cumène, du percarbonate de dicyclohexyle, de l'hydroperoxyde de tert-butyle, du peroxyde de p-menthane, $H_2O_2$ ou des mélanges de ceux-ci, et l'agent réducteur étant sélectionné parmi le groupe constitué des sels de l'acide sulfinique, des sels de l'acide sulfureux, du dithionite de sodium, du sulfite de sodium, de l'hyposulfite de sodium, de l'hydrogénosulfite de sodium, de l'acide ascorbique ainsi que ses sels, du formaldéhyde sulfoxylate de sodium, de la monohydroxyacétone et de la dihydroxyacétone, du sucre, du glucose, du dextrose, des sels de fer (II), des sels de l'étain (II) et des sels du titane (II) ou des mélanges de ceux-ci.

4. Compositions selon l'une quelconque des revendications 1 à 3, contenant 20 à 90 % en poids de A) et 10 à 80 % en poids de B).

5. Compositions selon l'une quelconque des revendications précédentes, contenant 30 à 80 % en poids de A) et 20 à 70 % en poids de B).

6. Compositions selon la revendication 4, contenant de manière supplémentaire 50 à 2000 parties en poids de C) (pour 100 parties en poids de A) + B)).

7. Compositions selon la revendication 5, contenant de manière supplémentaire 100 à 1500 parties en poids de C) (pour 100 parties en poids de A) + B)).

8. Compositions selon l'une quelconque des revendications précédentes, contenant de manière supplémentaire au moins une résine sélectionnée parmi le polycarbonate aromatique, le carbonate de polyester aromatique, le polyester, le polyamide ou des mélanges de ceux-ci.

9. Compositions selon l'une quelconque des revendications précédentes, dans lesquelles un latex de caoutchouc ayant une répartition granulométrique monomodale est respectivement utilisé pour la préparation des caoutchoucs

greffés A) et B).

**10.** Compositions selon l'une quelconque des revendications 1 à 8, dans lesquelles un latex de caoutchouc ayant une répartition granulométrique bimodale est respectivement utilisé pour la préparation des caoutchoucs greffés A) et B).

**11.** Compositions selon l'une quelconque des revendications 1 à 8, dans lesquelles un latex de caoutchouc ayant une répartition granulométrique monomodale est utilisé pour la préparation du caoutchouc greffé A) et un latex de caoutchouc ayant une répartition granulométrique bimodale est utilisé pour la préparation du caoutchouc greffé B).

**12.** Compositions selon l'une quelconque des revendications 1 à 8, dans lesquelles un latex de caoutchouc ayant une répartition granulométrique monomodale est utilisé pour la préparation du caoutchouc greffé A) et un latex de caoutchouc ayant une répartition granulométrique trimodale est utilisé pour la préparation du caoutchouc greffé B).

**13.** Compositions selon l'une quelconque des revendications 1 à 8, dans lesquelles un latex de caoutchouc ayant une répartition granulométrique bimodale est utilisé pour la préparation du caoutchouc greffé A) et un latex de caoutchouc ayant une répartition granulométrique trimodale est utilisé pour la préparation du caoutchouc greffé B).

**14.** Compositions selon l'une quelconque des revendications 1 à 8, dans lesquelles un latex de caoutchouc ayant une répartition granulométrique bimodale est utilisé pour la préparation du caoutchouc greffé A) et un latex de caoutchouc ayant une répartition granulométrique monomodale est utilisé pour la préparation du caoutchouc greffé B).

**15.** Compositions selon l'une quelconque des revendications précédentes, **caractérisées en ce que** des latex de caoutchouc ayant des diamètres de particule moyens ($d_{50}$) de 50 à 600 nm sont utilisés pour la préparation des caoutchoucs greffés A) et B).

**16.** Compositions selon l'une quelconque des revendications précédentes, **caractérisées en ce que** des latex de caoutchouc ayant des diamètres de particule moyens ($d_{50}$) de 100 à 500 nm sont utilisés pour la préparation des caoutchoucs greffés A) et B).

**17.** Compositions selon les revendications 15 et 16, **caractérisées en ce que** le diamètre de particule moyen ($d_{50}$) du latex de caoutchouc utilisé pour la préparation du caoutchouc greffé A) est inférieur au diamètre de particule moyen ($d_{50}$) du latex de caoutchouc utilisé pour la préparation du caoutchouc greffé B).

**18.** Utilisation des compositions selon l'une quelconque des revendications 1 à 17 pour la fabrication de pièces moulées.

**19.** Pièces moulées, que l'on peut obtenir à partir de compositions selon l'une quelconque des revendications 1 à 17.

**20.** Procédé pour la préparation de compositions, **caractérisé en ce que** :

A) au moins un caoutchouc greffé préparé par polymérisation en émulsion par voie radicalaire d'au moins un monomère de vinyle en présence d'au moins un caoutchouc A) ayant une température de transition vitreuse inférieure à 0°C, présent sous forme de latex, avec utilisation d'au moins un composé de peroxodisulfate en tant qu'amorceur,
B) au moins un caoutchouc greffé préparé par polymérisation en émulsion par voie radicalaire d'au moins un monomère de vinyle en présence d'au moins un caoutchouc B) ayant une température de transition vitreuse inférieure à 0°C, présent sous forme de latex, avec utilisation d'au moins un système redox en tant qu'amorceur et éventuellement
C) au moins un polymère thermoplastique exempt de caoutchouc obtenu par polymérisation d'au moins un monomère de vinyle formant une résine.

sont mélangés et immédiatement combinés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2420357 A
- DE 2420358 A
- EP 470229 A
- EP 473400 A
- WO 9113118 A
- DE 4113326 A
- DE 19649255 A
- EP 0029613 A
- EP 0007810 A
- DD 144415 A
- DE 1233131 A
- DE 1258076 A
- DE 2101650 A
- US 1379391 A
- JP 55125102 A
- DE 2724360 A
- DE 1495626 A
- DE 2232877 A
- DE 2703376 A
- DE 2714544 A
- DE 3000610 A
- DE 3832396 A
- DE 3077934 A
- DE 2842005 A
- DE 3506472 A
- DE 2407647 A
- DE 2407776 A
- DE 2715932 A
- DE 1900270 A
- US 3692744 A


### In der Beschreibung aufgeführte Nicht-Patentliteratur


- **HOUBEN-WEYL.** Methoden der Organischen Chemie, Makromolekulare Stoffe. Thieme Verlag, 1961, vol. 1, 674
- **HOUBEN-WEYL.** Methoden der Organischen Chemie, Makromolekulare Stoffe. Thieme Verlag, 1961, vol. 1, 339
- **W. SCHOLTAN ; H. LANGE.** *Kolloid Z. u. Z. Polymere,* 1972, vol. 250, 782-796
- **HOUBEN-WEYL.** Methoden der Organischen Chemie, Makromolekulare Stoffe. Thieme Verlag, 1961, vol. 1, 307
- Kunststoff-Handbuch. Carl Hanser Verlag, 1973, vol. VIII, 695 ff
- **S. ANDERS et al.** *Kunststoffe,* 1991, vol. 81 (4), 336-340